# EUROPÄISCHE PATENTANMELDUNG

(11) **EP 1 215 082 A2**
(43) Veröffentlichungstag der Anmeldung: **19.06.2002**
(21) Anmeldenummer: 01129942.7
(22) Anmeldetag: 17.12.2001
(51) Int. Cl.: B60R 11/00

(54) **Vorrichtung zum Befestigen eines ersten Teils an einem feststehenden zweiten Teil**

(30) Priorität: 18.12.2000 DE 10063035
(71) Anmelder: Goodrich Hella Aerospace Lighting Systems GmbH, 59557 Lippstadt (DE)
(72) Erfinder: Hessling, André, Dipl.-Ing., 59555 Lippstadt (DE); Wisch, Bodo, Dipl.-Ing., 28309 Bremen (DE)
(74) Vertreter: Hilleringmann, Jochen, Dipl.-Ing.

(57) **Zusammenfassung**

Die Erfindung betrifft eine Vorrichtung zum Befestigen eines ersten Teils an einem feststehenden zweiten Teil eines Fahrzeuges, wobei das erste Teil über eine Befestigungseinrichtung mit dem zweiten Teil lösbar verbunden ist, wobei die Befestigungseinrichtung ein Federelement aufweist und dass das erste Teil über das Federelement mit dem zweiten Teil gekoppelt ist.

## Beschreibung

Die Erfindung betrifft eine Vorrichtung zum Befestigen eines ersten Teils an einem feststehenden zweiten Teil eines Fahrzeuges, wobei das erste Teil über eine Befestigungseinrichtung mit dem zweiten Teil lösbar verbunden ist.

Aus DE-A-197 30 269 und DE-A-199 00 267 sind Vorrichtungen zum Befestigen eines ersten Teils an einem feststehenden zweiten Teils eines Luftfahrzeuges bekannt, bei denen das erste Teil über eine Befestigungseinrichtung lösbar mit dem zweiten Teil verbunden ist. Das erste Teil kann als ein Flugzeugpaneel ausgebildet sein, dass an einem C-förmigen Profil als zweites Teil befestigbar ist. Das erste Teil ist schwenkbar an der Befestigungseinrichtung bzw. dem zweiten Teil gelagert, so dass das erste Teil durch sein Eigengewicht in eine vertikale Lage bringbar ist, in der Montagearbeiten im Bereich der durch das Paneel später zu verschließenden Öffnung einer Decke durchgeführt werden können, und dann in eine die Öffnung verschließende horizontale Verriegelungsposition verschwenkbar ist. Nachteilig an der bekannten Vorrichtung ist, dass das erste Teil über die steife Befestigungseinrichtung an dem zweiten Teil in der horizontal verlaufenden Verriegelungsposition gehaltert ist. Hierdurch ergibt sich eine relativ steife Anordnung, die insbesondere aufgrund der im Flugbetrieb herrschenden mechanischen Beanspruchungen unter Umständen zu einem unerwünschten Brechen schwacher Bereiche der Befestigungseinrichtung führen kann.

Aufgabe der vorliegenden Erfindung ist es daher, eine Vorrichtung zum Befestigen eines ersten Teils an einem feststehenden zweiten Teil eines Fahrzeuges derart weiterzubilden, dass auf Dauer eine sichere Verbindung geschaffen wird, ohne dass das erste Teil und das zweiten Teil unzulässig hohen mechanischen Beanspruchungen ausgesetzt sind.

Zur Lösung dieser Aufgabe ist die erfindungsgemäße Vorrichtung dadurch gekennzeichnet, dass die Befestigungseinrichtung ein Federelement aufweist und dass das erste Teil über das Federelement mit dem zweiten Teil gekoppelt ist.

Der besondere Vorteil der erfindungsgemäßen Vorrichtung besteht darin, dass das erste Teil mit dem zweiten Teil über ein nachgiebiges Federelement gekoppelt ist. Durch die dämpfende Wirkung des Federelementes können insbesondere Kräfte in Folge einer dynamischen Schwingungsbelastung aufgenommen werden, so dass das erste Teil einer geringeren mechanischen Beanspruchung ausgesetzt ist. Hierdurch kann die Lebensdauer des ersten Teils erhöht werden. Weiterhin bewirkt das flexible Federelement einen Toleranzausgleich, was sich insbesondere bei der Montage des ersten Teils günstig auswirkt. Außerdem können sich mit der Zeit einstellende Formänderungen des ersten oder zweiten Teiles vorteilhaft ausgeglichen werden, so dass insgesamt eine stabile und relativ spannungsfreie Verbindungsanordnung geschaffen wird.

Nach einer bevorzugten Ausbildung der Erfindung ist das erste Teil über das Federelement mit der Befestigungseinrichtung gekoppelt, wobei die Befestigungseinrichtung kraftschlüssig mit dem zweiten Teil verbindbar ist. Das dem ersten Teil zugewandte Ende des Federelementes ist schwenkbar mit dem ersten Teil verbunden, so dass das erste Teil vorteilhaft um eine von dem zweiten Teil entfernt angeordneten Schwenkachse verschwenkbar angeordnet ist. Hierdurch kann der erforderliche Schwenkbereich von mindestens 90° sichergestellt werden.

Nach einer bevorzugten Ausführungsform der Erfindung ist das Federelement bogenförmig ausgebildet, wobei ein Teilbereich des Federelementes flächig auf einer Haltefläche eines Grundkörpers der Befestigungseinrichtung anliegt. In Verbindung mit einem Feststellelement kann hierdurch das Federelement fest mit dem zweiten Teil verbunden werden. Durch eine in einem spitzen Winkel zu der Wirkungslinie der Befestigungseinrichtung verlaufenden Stützfläche wird das Federelement in einer bogenförmigen oder bauchigen Form gehalten, die insbesondere eine Reduzierung der dynamischen Belastungen bewirkt. Das Federelement weist nichtlineare bzw. bevorzugt progressive Federeigenschaften auf, so dass die Ausbildung einer Resonanzfrequenz vermieden wird.

Nach einer Weiterbildung der Erfindung ist das Federelement mittels des Feststellelementes flächig auf der Haltefläche des Grundkörpers verspannt, so dass ein Teil der infolge mechanischer Beanspruchung entstehenden Bewegungsenergie in Reibungsenergie "vernichtet" werden kann. Hierdurch kann das Kräfteniveau über einen großen Frequenzbereich insgesamt geringer gehalten werden.

Ein Ausführungsbeispiel der Erfindung wird nachfolgend anhand der Zeichnungen näher erläutert.

Es zeigen:
- Fig. 1: eine perspektivische Darstellung einer Befestigungseinrichtung zum Befestigen eines ersten Teils an einem nicht dargestellten zweiten feststehenden Teil, wobei die Befestigungseinrichtung über ein Federelement mit dem ersten Teil gekoppelt ist,
- Fig. 2: einen Querschnitt entlang II-II der Fig. 1 durch die Befestigungseinrichtung mit Federelement in dem Zustand, in dem die Befestigungseinrichtung an dem zweiten Teil (Profil) befestigt ist,
- Fig. 3: einen Querschnitt durch das erste Teil, wobei das Federelement mit dem zweiten Teil verbunden und die Befestigungseinrichtung in mehrere Relativpositionen verschwenkt gezeigt ist,
- Fig. 4: eine perspektivische Darstellung des Federelementes und
- Fig. 5: eine Draufsicht auf die in Fig. 1 dargestellte Befestigungseinrichtung.

Die erfindungsgemäße Vorrichtung findet vorzugsweise Anwendung in Luftfahrzeugen, insbesondere Flugzeugen, in denen auf die Bauteile erhebliche Beschleunigungskräfte einwirken.

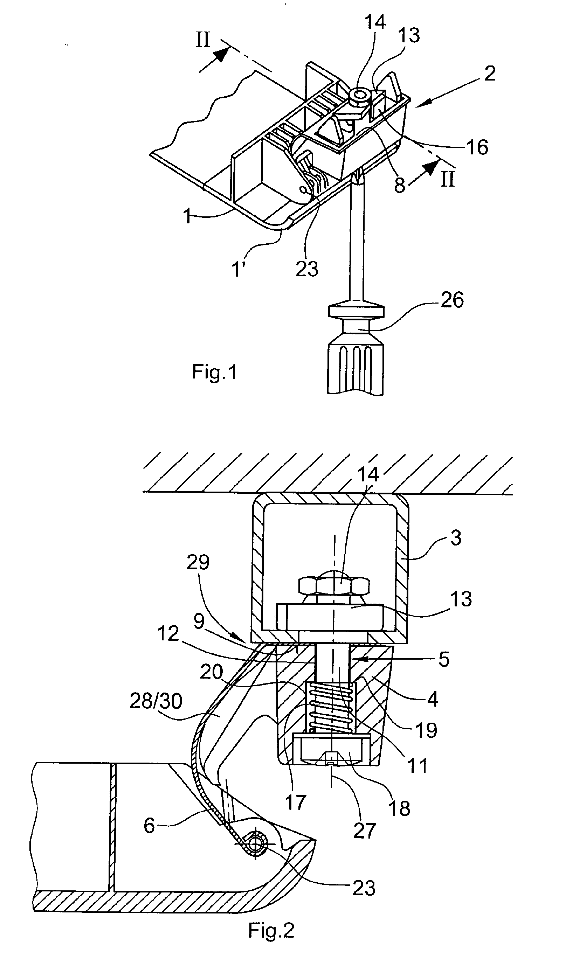

Ein erstes Teil 1, das beispielsweise als Flugzeugpaneel oder als Funktionstafel ausgebildet sein kann, wird mittels einer Befestigungseinrichtung 2 mit einem zweiten Teil 3 lösbar verbunden. Das erste Teil 1 ist in Fig. 1 nur als randseitiger Anschnitt dargestellt. Die Befestigungseinrichtung 2 ist zu beiden Seiten gegenüberliegender Randseiten 1' versetzt zueinander entlang der Randseiten 1' angeordnet. Das zweite Teil 3 kann als feststehende C-förmige Profilschiene ausgebildet sein.

Das erste Teil 1 ist als plattenförmiges Kunststoffteil ausgebildet und weist mehrere nicht dargestellte Leseleuchtenöffnungen sowie Öffnungen zum Einsatz von Luftduschen auf. Die Befestigung des ersten Teils 1 erfolgt an den gegenüberliegenden Randseiten 1', die sich parallel zu den korrespondierenden zweiten Teilen 3 erstrecken.

Die Befestigungseinrichtung 2 zur lösbaren Befestigung des ersten Teils 1 an dem feststehenden zweiten Teil 3 besteht im Wesentlichen aus einem quaderförmigen Grundkörper 4, der über eine Schraubverbindung 5 an dem zweiten Teil 3 festlegbar ist, sowie einem flexiblen Federelement 6, das über die Schraubverbindung 5 an dem Grundkörper 4 festlegbar und über ein Scharnier 7 mit dem ersten Teil 1 schwenkbar verbunden ist.

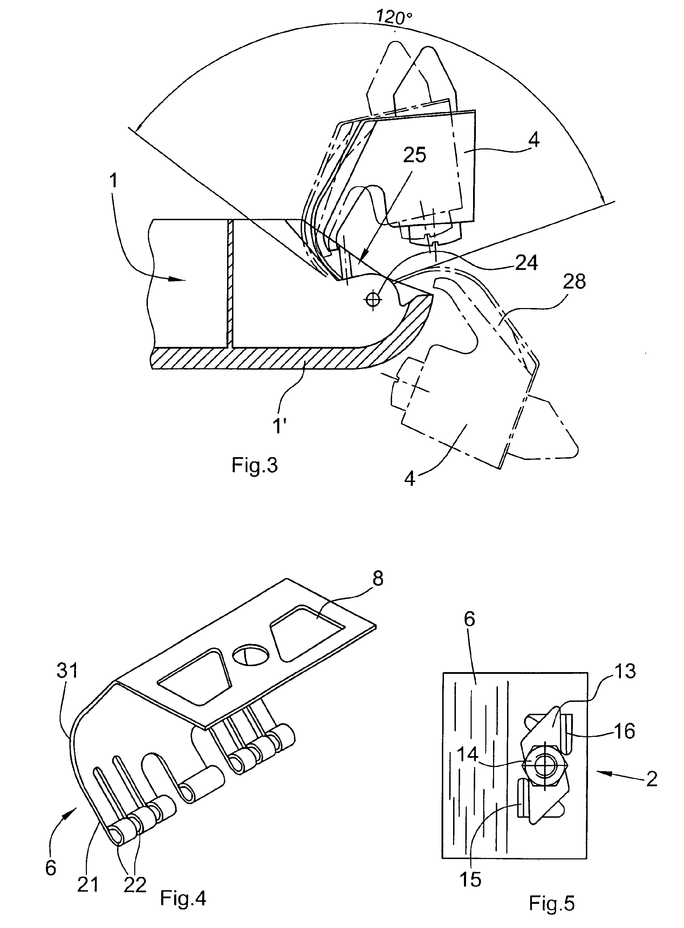

Wie aus Fig. 4 ersichtlich ist, ist das Federelement 6 bogenförmig ausgebildet und weist auf einer dem ersten Teil 1 abgewandten Seite einen mit Durchbrechungen versehenen ebenen Endabschnitt 8 auf, der flächig auf einer Haltefläche 9 des Grundkörpers 4 positionierbar ist. Zu diesem Zweck weist der Endabschnitt 8 zu Erhebungen der Haltefläche 9 korrespondierende Durchbrechungen 10 auf, so dass eine eindeutige Positionierung des Federelementes 6 bezüglich des Grundkörpers 4 gegeben ist.

Nachdem der Endabschnitt 8 des Federelementes 6 auf die Haltefläche 9 positioniert worden ist, erfolgt das Anbringen der Schraubverbindung 5. Zu diesem Zweck wird eine Schraube 11 durch eine Führungsbohrung 12 des Grundkörpers 4 geführt und im Bereich der Haltefläche 9 mit einer trapezförmigen Festlegmutter 13 sowie einer Anschlagmutter 14 verbunden. Die Festlegmutter 13 ist in einer Entriegelungsposition in Längsrichtung des Grundkörpers 4 zwischen zwei Anschlägen 15 und 16 angeordnet. Dadurch, dass eine vorgespannte Schraubenfeder 17 zwischen einem Kopf 18 der Schraube 11 und einer Anschlagschulter 19 einer dem ersten Teil 1 zugewandten Ausnehmung 20 des Grundkörpers 4 angeordnet ist, wird die Festlegmutter 13 bzw. der Endabschnitt 8 des Federelementes 6 in der Ausgangsposition (Entriegelungsposition) auf die Haltefläche 9 gedrückt.

Ein dem ersten Teil 1 zugewandtes Ende des Federelementes 6 ist nach Art eines Scharnierbandes 21 ausgebildet und über einen durch fluchtende Öffnungen 22 des Scharnierbandes 21 einerseits und Öffnungen 23 des ersten Teils 1 sich erstreckenden Stift 24 mit dem ersten Teil 1 drehbar verbunden. Wie aus Fig. 3 deutlich wird, kann infolge des Vorsehens von Ausbuchtungen 25 des ersten Teils einerseits und der Anlenkung des ersten Teils 1 mittels des Federelementes 6 ein Schwenkwinkelbereich von 120° überstrichen werden.

Zur Montage des ersten Teils 1 an das zweite Teil 3 kann das erste Teil 1, nachdem der Endabschnitt 8 des Federelementes 6 in der weiter oben beschriebenen Weise an dem Grundkörper 4 der Befestigungseinrichtung 2 gehaltert worden ist, durch Anlage des Endabschnitts 8 bzw. der Haltefläche 9 an der Außenfläche des nach unten geöffneten C-förmigen Teils 3 und unter Eingreifen und nachfolgendem Verdrehen der Festlegmutter 13 in dem Schlitz des C-förmigen Profils 3 in eine Teilverriegelungsposition verbracht werden. Die Festlegmutter 13 wird etwa um 60° mittels Betätigung der Schraube 11 durch einen Schraubendreher 26 verdreht. In dieser Teilverriegelungsposition erstreckt sich das erste Teil 1 im Wesentlichen vertikal, so dass Einbauarbeiten an der noch später zu schließenden Öffnung zwischen den sich parallel erstreckenden schienenförmigen zweiten Teilen 3 vorgenommen werden können. Nachfolgend wird das erste Teil 1 um etwa 90° in eine die Öffnung abdeckende Position verschwenkt und an der gegenüberliegenden Randseite des ersten Teils 1 über eine gleichartige Befestigungseinrichtung 2 an dem korrespondierenden zweiten Teil 3 befestigt. Durch Weiterdrehen der Schraube 11 erfolgt eine kraftschlüssige Verbindung zwischen dem Grundkörper 4 und dem zweiten Teil 3, wie detailliert bereits in der DE 199 00 267 A1 beschrieben ist. Dabei verhindern die Anschläge 15,16, dass die Festlegmutter 13 nicht weitergedreht wird.

Alternativ kann das erste Teil 1 auch an einer Randseite 1' sofort in die Endverriegelungsposition verbracht werden, so dass ein Verschieben an dem schienenförmigen zweiten Teil 3 nicht mehr möglich ist. In der Endverriegelungsposition ist das Federelement 6 mittels der Schraubverbindung 5 kraftschlüssig an dem zweiten Teil 3 befestigt. Damit das Federelement 6 eine bauchige Form aufweist, ragt von dem Grundkörper 4 eine zu einer Wirkungslinie 27 (Längsachse der Führungsbohrung 12) abragende Stützfläche 28 auf, die sich von einem inneren Rand 29 der Haltefläche 9 unter Bildung einer Ausbuchtung 30 in einem spitzen Winkel erstreckt. Die bauchige Stützfläche 28 erstreckt sich bis in einen mittleren Kehlenbereich 31 des Federelementes 6. Hierdurch erhält das Federelement 6 einen nichtlinearen Federkennlinienverlauf, insbesondere einen progressiven Federkennlinienverlauf.

In der Endverriegelungsposition stellt das Federelement 6 ein Verbindungsteil zwischen dem ersten Teil 1 und dem zweiten Teil 3 dar, dass eine dämpfende Wirkung ausübt. Insbesondere bei dynamischer Schwingungsbelastung können Kräfte aufgenommen werden, ohne dass eine Resonanzfrequenz auftritt.

Das Federelement 6 ist vorzugsweise als metallische Blattfeder bestehend aus einem Blechmaterial ausgebildet, die mit dem Endabschnitt 8 auf der Haltefläche des aus Kunststoff hergestellten Grundkörpers 4 aufliegt.

Das Federelement 6 ermöglicht insbesondere ein durch Formänderung bewirktes Aufnehmen von Kräften in X- und Y-Richtung, siehe Fig. 2. Aber auch in der zu diesen senkrecht orientierten Richtung entlang des Scharniers 7 bzw. der Randseite 1' des ersten Teils 1 können auftretende Kräfte kompensiert werden. Vorteilhaft können sowohl Fertigungstoleranzen als auch altersbedingte mechanische Spannungen des ersten und zweiten Teils 1,3 aufgenommen werden.

## Patentansprüche

1. Vorrichtung zum Befestigen eines ersten Teils an einem feststehenden zweiten Teil eines Fahrzeuges, wobei das erste Teil über eine Befestigungseinrichtung mit dem zweiten Teil lösbar verbunden ist, **dadurch gekennzeichnet, dass** die Befestigungseinrichtung (2) ein Federelement (6) aufweist und dass das erste Teil (1) über das Federelement (6) mit dem zweiten Teil (3) gekoppelt ist.

2. Vorrichtung nach Anspruch 1, **dadurch gekennzeichnet, dass** das erste Teil (1) mit dem Federelement (6) schwenkbar verbunden ist.

3. Vorrichtung nach Anspruch 1 oder 2, **dadurch gekennzeichnet, dass** das Federelement (6) bogenförmig ausgebildet ist und dass das Federelement (6) mit einem Teilbereich flächig auf einer Haltefläche (9) eines Grundkörpers (4) der Befestigungseinrichtung (2) anliegt.

4. Vorrichtung nach einem der Ansprüche 1 bis 3, **dadurch gekennzeichnet, dass** die Haltefläche (9) eine unter einem spitzen Winkel zu einer Wirkungslinie (27) der Befestigungseinrichtung (2) verlaufende Stützfläche (28) aufweist, an der das Federelement (6) bis zu einem Kehlenbereich (31) anliegt.

5. Vorrichtung nach einem der Ansprüche 1 bis 4, **dadurch gekennzeichnet, dass** die Stützfläche (28) bogenförmig gewölbt und/oder bauchig ausgebildet ist.

6. Vorrichtung nach einem der Ansprüche 1 bis 5, **dadurch gekennzeichnet, dass** das Federelement (6) mittels eines den Grundkörper (4) an das zweite Teil (3) festlegbaren Feststellelementes (11,13) der Befestigungseinrichtung (2) verliersicher an dem Grundkörper (4) gehaltert und in einer Verriegelungsposition des ersten Teils (1) an dem zweiten Teil (3) durch Betätigung des Feststellelementes (11, 13) mit dem zweiten Teil (3) verspannt ist.

7. Vorrichtung nach einem der Ansprüche 1 bis 6, **dadurch gekennzeichnet, dass** das Federelement (6) und das erste Teil (1) zur schwenkbaren Verbindung miteinander ein Scharnierband (21) bilden.

8. Vorrichtung nach einem der Ansprüche 1 bis 7, **dadurch gekennzeichnet, dass** das Federelement (6) als eine Blattfeder ausgebildet ist, die eine nichtlineare Federkennlinie aufweist.

9. Vorrichtung nach einem der Ansprüche 1 bis 8, **dadurch gekennzeichnet, dass** das Federelement (6) aus einem Blechmaterial besteht und derart auf der Stützfläche (28) aufliegt, dass das Federelement (6) eine parabelförmige oder progressive Federkennlinie aufweist.

10. Vorrichtung nach einem der Ansprüche 1 bis 9, **dadurch gekennzeichnet, dass** das erste Teil (1) als Flugzeugpaneel ausgebildet ist, das zumindest bereichsweise an zwei parallelen Randseiten (1') Ausbuchtungen (25) aufweist zur Anlenkung an das Federelement (6), derart, dass das Flugzeugpaneel (1) um einen überstumpfen Winkel zu dem Federelement (6) schwenkbar ist.
